# EUROPÄISCHE PATENTANMELDUNG

(11) **EP 3 796 286 A1**
(43) Veröffentlichungstag der Anmeldung: **24.03.2021**
(21) Anmeldenummer: 20186230.7
(22) Anmeldetag: 16.07.2020
(51) Int. Cl.: G08G 5/00, H04S 7/00, G01S 7/04, G01S 7/51, G01S 7/56, G06F 3/01

(54) **SYSTEM UND VERFAHREN ZUR SITUATIONSERKENNUNG BEZÜGLICH SICH IN EINEM ÜBERWACHUNGSRAUM BEFINDLICHER MOBILER OBJEKTE**

(30) Priorität: 23.09.2019 DE 102019006679
(71) Anmelder: MBDA Deutschland GmbH, 86529 Schrobenhausen (DE)
(72) Erfinder: Lamac, Klaus, 80993 München (DE); Mamier, Lothar, 82281 Egenhofen (DE)
(74) Vertreter: Isarpatent

(57) **Zusammenfassung**

Ein System zur Situationserkennung bezüglich sich in einem Überwachungsraum befindlicher mobiler Objekte umfasst ein Hostsystem mit einer Datenschnittstelle zum Empfang von Lagedaten, welche als Lagedateninhalte zumindest eine räumliche Position der Objekte innerhalb des Überwachungsraums und ein Identifizierungsmerkmal des jeweiligen Objekts enthalten, ein mit dem Hostsystem verbundenes Sonifikationsmodul mit einer Ausgabeschnittstelle, wobei das Sonifikationsmodul dazu eingerichtet ist, gemäß einer vorbestimmten Zuordnung von akustischen Parametern zu den Lagedateninhalten akustische Parameter zu ermitteln, ein die ermittelten akustischen Parameter repräsentierendes Audiosignal zu erzeugen und das Audiosignal an der Ausgabeschnittstelle auszugeben, und einen mit der Ausgabeschnittstelle des Sonifikationsmoduls verbundenen akustischen Wandler, welcher dazu eingerichtet ist, das Audiosignal des Sonifikationsmoduls in eine durch einen menschlichen Benutzer wahrnehmbare akustische Ausgabe umzuwandeln.

## Beschreibung

Die vorliegende Erfindung betrifft ein System und ein Verfahren zur Situationserkennung bezüglich sich in einem Überwachungsraum befindlicher mobiler Objekte sowie ein Überwachungssystem.

Sowohl zu militärischen als auch zu zivilen Zwecken werden Gebiete auf (und unter) See oder an Land, häufig mit dem zugehörigen Luftraum, mittels Sensorsystemen wie z. B. Radarsensoren, Satelliten oder dergleichen überwacht, um mobile Objekte innerhalb des überwachten Gebiets zu erkennen. Hierbei erfolgt typischerweise eine Identifizierung der Objekte, z. B. als Schiff, Flugzeug, Hubschrauber, Lastwagen oder dergleichen, sowie eine Bestimmung der Position, der Geschwindigkeit, der Bewegungsrichtung und ähnlicher Eigenschaften der Objekte anhand der erfassten Sensordaten. Diese aus den Sensordaten ermittelten Informationen können als Lagedaten zu einer Überwachungsstation übermittelt werden. Im militärischen Bereich kann die Überwachungsstation z. B. eine Kommandozentrale sein, von der aus eine militärische Operation koordiniert wird.

In einer Überwachungsstation werden die Lagedaten typischerweise auf Bildschirmen oder ähnlichen graphischen Wiedergabeeinrichtungen visualisiert, z. B. als interaktive Karte, auf welcher die Objekte je nach deren Identifizierung als unterschiedliche graphische Objekte angezeigt werden. Das diensthabende Personal kann sich anhand der visualisierten Darstellung der Objekte einen Überblick über die Situation im überwachten Gebiet verschaffen. Dies wird häufig als Situationserkennung bezeichnet.

In der US 2007/0070069 A1 wird beschrieben, zusätzlich zu reinen Positionsdaten von Objekten auch Bilder der Objekte und Audioaufnahmen aus der Umgebung der Objekte zu erfassen und eine visualisierte Darstellung des überwachten Bereichs durch Wiedergabe der aufgenommenen Bild- und Audiodaten anzureichern.

Da bei der Gebietsüberwachung häufig eine große Anzahl an Objekten gleichzeitig und zusätzlich die Informationen zu den einzelnen Objekten durch die Benutzer bzw. das Bedienpersonal im Blick behalten werden muss, bindet die visuelle Darstellung der im überwachten Bereich vorliegenden Situation typischerweise einen sehr großen Teil der Aufmerksamkeit des Personals.

Es ist Aufgabe der vorliegenden Erfindung, Lösungen zu finden, mit denen eine Situationserkennung bezüglich sich in einem Überwachungsraum befindlicher mobiler Objekte vereinfacht wird.

Diese Aufgabe wird jeweils durch die Gegenstände der unabhängigen Ansprüche gelöst.

Gemäß einem ersten Aspekt der Erfindung ist ein System zur Situationserkennung bezüglich sich in einem Überwachungsraum befindlicher mobiler Objekte vorgesehen. Das System umfasst ein Hostsystem mit einer Datenschnittstelle zum Empfang von Lagedaten, welche als Lagedateninhalte zumindest enthalten: eine räumliche Position der Objekte innerhalb des Überwachungsraums und mindestens ein Identifizierungsmerkmal des jeweiligen Objekts. Ferner umfasst das System ein mit dem Hostsystem verbundenes Sonifikationsmodul mit einer Ausgabeschnittstelle, wobei das Sonifikationsmodul dazu eingerichtet ist, gemäß einer vorbestimmten Zuordnung von akustischen Parametern zu den Lagedateninhalten akustische Parameter zu ermitteln, ein die ermittelten akustischen Parameter repräsentierendes Audiosignal zu erzeugen und das Audiosignal an der Ausgabeschnittstelle auszugeben, und einen mit der Ausgabeschnittstelle des Sonifikationsmoduls verbundenen akustischen Wandler, welcher dazu eingerichtet ist, das Audiosignal des Sonifikationsmoduls in eine durch einen menschlichen Benutzer wahrnehmbare akustische Ausgabe, also Schall umzuwandeln.

Gemäß einem zweiten Aspekt der Erfindung ist ein Überwachungssystem zum Überwachen eines Überwachungsraums vorgesehen. Das Überwachungssystem umfasst ein Sensorsystem mit einer Vielzahl an Überwachungssensoren zum Erfassen von Lagedaten von sich in dem Überwachungsraum befindlichen Objekten, wobei die Lagedaten als Lagedateninhalte zumindest enthalten: eine räumliche Position der Objekte innerhalb des Überwachungsraums und ein Identifizierungsmerkmal des jeweiligen Objekts. Das Überwachungssystem weist außerdem ein System gemäß dem ersten Aspekt der Erfindung auf, wobei das Sensorsystem mit der Datenschnittstelle des Hostsystems verbunden ist.

Gemäß einem dritten Aspekt der Erfindung ist ein Verfahren zur Überwachung eines Überwachungsraums vorgesehen. Das Verfahren umfasst:
- Erfassen von Lagedaten von sich in dem Überwachungsraum befindlichen Objekten mittels Überwachungssensoren, wobei die Lagedaten als Lagedateninhalte zumindest enthalten: eine räumliche Position der Objekte innerhalb des Überwachungsraums und ein Identifizierungsmerkmal des jeweiligen Objekts;
- Ermitteln akustischer Parameter gemäß einer vorbestimmten Zuordnung von akustischen Parametern zu den Lagedateninhalten;
- Erzeugen eines die akustischen Parameter repräsentierenden Audiosignals; und
- Umwandeln des Audiosignals in eine durch einen menschlichen Benutzer wahrnehmbare akustische Ausgabe mittels eines akustischen Wandlers.

Das Verfahren gemäß diesem Aspekt kann insbesondere mithilfe eines Überwachungssystems gemäß dem zweiten Aspekt der Erfindung bzw. einem System gemäß dem ersten Aspekt der Erfindung durchgeführt werden. Die zu einem der Aspekte der Erfindung offenbarten Merkmale und Vorteile gelten daher auch für die anderen Aspekte der Erfindung offenbart und umgekehrt.

Eine der Erfindung zugrundeliegende Idee besteht darin, Lagedaten, welche die Position, die Bewegungsrichtung, die Geschwindigkeit, den Typ oder vergleichbare Informationen über sich in einem überwachten Raum befindliche Objekte repräsentieren, zu sonifizieren. Hierbei werden die Informationen bzw. Datenbeziehungen in wahrnehmbare Beziehungen in einem akustischen Signal umgewandelt. Ein Sonifikationsmodul, welches z. B. als ein Computer realisiert sein kann, der ein entsprechendes Softwareprogramm ausführt, transformiert die Lagedaten in ein Audiosignal, welches von einem elektroakustischen Wandler, wie z. B. einem Lautsprecher bzw. einem Kopfhörer in Schallwellen umgewandelt wird. Das Sonifikationsmodul ermittelt anhand des Inhalts der Lagedaten, also z. B. anhand der Position und des Identifikationsmerkmals des Objekts, gemäß einem vorbestimmten Algorithmus bzw. einer vorbestimmten Zuordnung einen Satz akustischer Parameter, wie z. B. Tonhöhe, Klangfarbe, Rhythmus, Lautstärke, Akkorde. Beispielsweise kann je nach Identifizierungsmerkmal des Objekts die Klangfarbe und je nach Abstand zu einem vorbestimmten Ort die Lautstärke ermittelt werden. Z. B. kann ein Hubschrauber durch den Klang einer Gitarrensaite repräsentiert werden. Näheren Objekten kann beispielsweise eine größere Lautstärke als weiter entfernten Objekten zugeordnet werden.

Einer der Vorteile der Erfindung ist es, dass die Fähigkeiten des menschlichen Gehörs in die Situationserkennung eingebunden werden. Durch die Sonifikation der Lagedaten wird der Benutzer bzw. das Bedienpersonal in die Lage versetzt, Änderungen, z. B. das Auftauchen neuer Objekte im Überwachungsraum, wahrzunehmen, ohne hierfür ausschließlich auf eine visuelle Darstellung angewiesen zu sein. Ferner wird die Fähigkeit des menschlichen Gehörs vorteilhaft ausgenutzt, bereits minimale Änderungen bzw. Unterschiede in Klängen wahrzunehmen. Damit wird es dem Bedienpersonal erleichtert, auch bei einer sehr großen Anzahl an Objekten auf einfache Weise den Überblick zu behalten. Eine Parallelisierung der Überwachung mit anderen Aufgaben wird damit ebenfalls erleichtert. Da bei einem menschlichen Benutzer Hören praktisch "nebenbei" erfolgt, wird es dem Benutzer erheblich erleichtert, eine Situation zu erfassen. Das Bedienpersonal einer Überwachungsanlage kann damit erheblich entlastet werden.

Vorteilhafte Ausgestaltungen und Weiterbildungen ergeben sich aus den auf die unabhängigen Ansprüche rückbezogenen Unteransprüchen in Verbindung mit der Beschreibung.

Gemäß einer Ausführungsform können die akustischen Parameter einen oder mehrere der folgenden Parameter umfassen: Tonhöhe, Klangfarbe, Rhythmus, Lautstärke, Akkorde.

Gemäß einer weiteren Ausführungsform können die mobilen Objekte Luftfahrzeuge umfassen und die Lagedaten ein Recognized Air Picture enthalten. Ein Recognized Air Picture oder RAP ist eine Liste aller Objekte in dem Überwachungsraum, z. B. einem Luftraum, wobei jedes Objekt, insbesondere jedes Luftfahrzeug als freundlich oder feindlich identifiziert wird. Optional sind zusätzliche Informationen wie der genaue Objekttyp etc. enthalten. Die Informationen können aus verschiedenen Quellen stammen, z. B. von verschiedenen Überwachungssensoren oder aus einer Datenbank.

Gemäß einer weiteren Ausführungsform kann das Hostsystem eine mit der Datenschnittstelle verbundene erste Bedieneinrichtung mit einer Ausgabeeinrichtung zur Erzeugung einer visuellen Darstellung basierend auf den Lagedaten aufweisen. Die Bedieneinrichtung kann z. B. als ein Computer mit einem Monitor als Ausgabeeinrichtung realisiert sein. Die Ausgabeeinrichtung kann eine graphische Darstellung bzw. eine Visualisierung des Überwachungsraums und der sich darin befindlichen Objekte anzeigen, z. B. als virtuelle Übersichtskarte. Durch die Kombination der visuellen Darstellung mit der durch Sonifikation der Lagedaten erzeugten klanglichen Darstellung wird dem Benutzer die Situationserkennung weiter vereinfacht.

Die erste Bedieneinrichtung kann optional eine Eingabeeinrichtung zur Eingabe von Steuerbefehlen durch den Benutzer aufweisen, z. B. in Form einer Tastatur oder entsprechender Schaltflächen auf einem berührungssensitiven Display, wobei das Sonifikationsmodul dazu eingerichtet ist, die Erzeugung des Audiosignals gemäß den eingegebenen Steuerbefehlen anzupassen. Die erste Bedieneinrichtung kann damit zum Modifizieren von Einstellungen des Sonifikationsmoduls genutzt werden. Allgemein enthält ein Steuerbefehl Steuerdaten, auf denen basierend das Sonifikationsmodul die Erzeugung des Audiosignals anpasst. Insbesondere ist denkbar, dass die vorbestimmte Zuordnung von akustischen Parametern zu den Lagedateninhalten basierend auf den Steuerbefehlen vorgebbar ist. Beispielsweise kann vorgesehen sein, dass der Benutzer die Zuordnung eines bestimmten Tons zu einem bestimmten Objekttyp ändern kann. Somit kann die Sonifikation individuell an die Wünsche des Benutzers angepasst werden.

Weiterhin optional ist denkbar, dass der Steuerbefehl Steuerdaten enthält, die einen Teilbereich des Überwachungsraums räumlich definieren, und wobei das Sonifikationsmodul dazu eingerichtet ist, basierend auf den Steuerdaten Lagedaten von Objekten auszuwählen, die sich in dem definierten Teilbereich des Überwachungsraums befinden, und das Audiosignal nur aus den Lagedaten dieser Objekte zu erzeugen. Beispielsweise kann der Benutzer einen bestimmten Sektor innerhalb des Überwachungsbereichs, z. B. einen Winkelsektor in Bezug auf einen vorbestimmten Ort innerhalb des Überwachungsbereichs auswählen. Die zugehörigen Steuerdaten veranlassen eine entsprechende Einstellung des Sonifikationsmoduls, welches in der Folge lediglich die Lagedaten von Objekten sonifiziert, die sich in dem gewählten Sektor befinden.

Gemäß einer weiteren Ausführungsform kann vorgesehen sein, dass der Steuerbefehl das Identifikationsmerkmal von einem oder mehreren Objekten als Steuerdaten enthält, und wobei das Sonifikationsmodul dazu eingerichtet ist, Lagedaten von Objekten auszuwählen, die das entsprechende Identifikationsmerkmal aufweisen, und das Audiosignal nur aus den Lagedaten dieser Objekte zu erzeugen. Ähnlich wie oben zur Auswahl des Teilbereichs beschrieben, kann der Benutzer z. B. einen bestimmten Objekttyp auswählen und das Sonifikationsmodul sonifiziert nur die Lagedaten von Objekten dieses Typs. So kann sich ein Benutzer lediglich Lagedaten zu Objekten vom Typ "Bodenfahrzeug" oder vom Typ "Luftfahrzeug" oder vom Typ "Hubschrauber" etc. sonifizieren und ausgeben lassen.

Gemäß einer weiteren Ausführungsform kann das System eine mit dem Hostsystem oder einer Steuerschnittstelle des Sonifikationsmoduls verbundene zweite, interaktive Bedieneinrichtung aufweisen, welche eine Sensoreinrichtung zum Erfassen einer Bewegung des Benutzers und/oder einer sprachlichen Äußerung des Benutzers aufweist. Die zweite Bedieneinrichtung ist dazu eingerichtet, einen Steuerbefehl basierend auf der erfassten Bewegung und/oder auf der erfassten Äußerung zu erzeugen, wobei das Sonifikationsmodul dazu eingerichtet ist, die Erzeugung des Audiosignals gemäß den eingegebenen Steuerbefehlen anzupassen. Die zweite Bedieneinrichtung ist somit, wie die erste Bedieneinrichtung, allgemein zur Erzeugung von Steuerbefehlen eingerichtet. Jedoch umfasst die zweite Bedieneinrichtung als Eingabeeinrichtung einen Sensor, mit dem Gesten, Bewegungen, sprachliche Äußerungen oder dergleichen erfassbar sind, welchen ein Steuerbefehl zugeordnet ist. Der Sensor kann beispielsweise als optischer Sensor wie z. B. eine Kamera realisiert sein, als Eyetracker, als Datenhandschuh, als Mikrophon zur Spracherkennung oder dergleichen realisiert sein. Die zweite Bedieneinrichtung erleichtert dem Benutzer die intuitive Bedienung des Systems.

Die zweite Bedieneinrichtung kann andere oder dieselben Steuerbefehle erzeugen, wie die erste Bedieneinrichtung. Insbesondere kann der Steuerbefehl Steuerdaten enthalten, die einen Teilbereich des Überwachungsraums räumlich definieren, und wobei das Sonifikationsmodul dazu eingerichtet ist, basierend auf den Steuerdaten Lagedaten von Objekten auszuwählen, die sich in dem definierten Teilbereich des Überwachungsraums befinden, und das Audiosignal nur aus den Lagedaten dieser Objekte zu erzeugen.

Weiterhin optional kann der Steuerbefehl das Identifikationsmerkmal von einem oder mehreren Objekten als Steuerdaten enthalten, wobei das Sonifikationsmodul dazu eingerichtet ist, Lagedaten von Objekten auszuwählen, die das entsprechende Identifikationsmerkmal aufweisen, und das Audiosignal nur aus den Lagedaten dieser Objekte zu erzeugen.

Gemäß einer weiteren Ausführungsform kann vorgesehen sein, dass das Sonifikationsmodul dazu eingerichtet ist, basierend auf der in den Lagedaten enthaltenen Position der Objekte ein Richtungssignal zu erzeugen, welches eine Orientierung der Objekte in Bezug auf einen Ursprung eines Referenzkoordinatensystems des Überwachungsraums repräsentiert, wobei der akustische Wandler zumindest zwei Schallquellen aufweist und dazu eingerichtet ist, basierend auf dem Richtungssignal das Audiosignal mittels der zumindest zwei Schallquellen in eine die Orientierung repräsentierende akustische Ausgabe umzuwandeln. Das Richtungssignal gibt an, wo sich das jeweilige Objekt in Bezug auf einen Referenzpunkt, z. B. den Ort, an welchem sich der Benutzer des Systems oder ein Zentrum des Überwachungsraums, befindet. Das Sonifikationsmodul erzeugt das akustische Signal als Stereo- oder Surroundsignal, so dass der Wandler die akustische Ausgabe derart erzeugen kann, dass für den Benutzer der Schall aus der Richtung wahrnehmbar ist, in der sich das Objekt befindet.

Optional kann ein mit dem Sonifikationsmodul verbundener Orientierungssensor vorgesehen sein, welcher dazu eingerichtet ist, eine Orientierung des Kopfs des Benutzers relativ zum Ursprung des Referenzkoordinatensystems zu erfassen und ein die Orientierung des Kopfs des Benutzers relativ zum Ursprung des Referenzkoordinatensystems repräsentierendes Orientierungssignal zu erzeugen, wobei das Sonifikationsmodul dazu eingerichtet ist, das Richtungssignal basierend auf dem Orientierungssignal derart zu modifizieren, dass dieses eine Orientierung der Objekte relativ zu einem Ursprung eines Benutzerkoordinatensystems, das ortsfest in Bezug auf den Kopf des Benutzers ist, repräsentiert, welche deren Orientierung im Referenzkoordinatensystem entspricht, wenn der Wandler nichtortsfest in Bezug auf den Benutzer bzw. das Benutzerkoordinatensystem angeordnet ist, und das Richtungssignal basierend auf dem Orientierungssignal derart zu modifizieren, dass dieses eine Orientierung der Objekte relativ zu dem Ursprung eines Benutzerkoordinatensystems repräsentiert, wenn der Wandler ortsfest in Bezug auf den Benutzer bzw. das Benutzerkoordinatensystem angeordnet ist. Damit kann, je nach ortsfester oder nicht-ortsfester Anordnung des Wandlers, relativ zum Benutzer die Richtung, aus der der Benutzer den Schall wahrnimmt, mitgedreht oder festgehalten werden. Falls der Wandler z. B. als ein relativ zum Benutzer ortsfester Kopfhörer ausgebildet ist, wird die räumliche Verteilung der Klänge entgegen der Bewegung des Kopfes gedreht bzw. bleibt in Bezug auf das Referenzkoordinatensystem gleich. Das heißt, der räumliche Klangeindruck, den der Benutzer wahrnimmt, ändert sich bei einer Drehung des Kopfs. Falls der Wandler durch Lautsprecher gebildet ist, die nicht ortsfest in Bezug den Benutzer angeordnet sind, wenn sich dieser bewegt, wird die Richtungsinformation mit der Bewegung des Kopfes des Benutzers mitgedreht. Das heißt, selbst wenn sich der Benutzer innerhalb des Zimmers dreht, ändert sich der räumliche Klangeindruck nicht.

Gemäß einer weiteren Ausführungsform kann das Hostsystem einen mit der Datenschnittstelle verbundenen Datenspeicher aufweisen, welcher die Lagedaten speichert, wobei das Sonifikationsmodul mit dem Datenspeicher verbunden ist. Gegebenenfalls kann die erste Bedieneinrichtung über den Datenspeicher mit der ersten Datenschnittstelle verbunden sein.

Allgemein repräsentiert das "Identifizierungsmerkmal" eine Klassifizierungseigenschaft eines Objekts, insbesondere eine Klassifizierung als mobile Plattform oder Truppe. Optional kann zusätzlich eine weitere, detailliertere Klassifizierung durch das Identifizierungsmerkmal repräsentiert sein, z.B. als Land-, Luft- oder Wasserfahrzeug, und weiter optional eine noch detaillierte Klassifizierung als Lastwagen, Panzer, Flugzeug, Hubschrauber, Rakete, Drohne, U-Boot, Handelsschiff etc. Auch kann die Klassifizierung "Unbekannt" durch das Identifizierungsmerkmal repräsentiert sein. Das heißt, auch ein nicht identifizierbares Objekt kann mit einem vorbestimmten Klang sonifiziert werden, welcher die Eigenschaft "Unbekannt" repräsentiert.

Unter einem "Überwachungsraum" wird hierin allgemein ein geographisches Gebiet, z.B. an Land und/oder auf See und/oder unter See, sowie optional der zugehörige Luftraum verstanden und/oder ein dreidimensionales, räumliches Gebiet im Weltall. Die Situationserkennung in dem Überwachungsraum kann sich insbesondere auf eine militärische oder eine zivile Lage beziehen.

Im Folgenden wird die Erfindung unter Bezugnahme auf die Figuren der Zeichnungen erläutert. Von den Figuren zeigen:

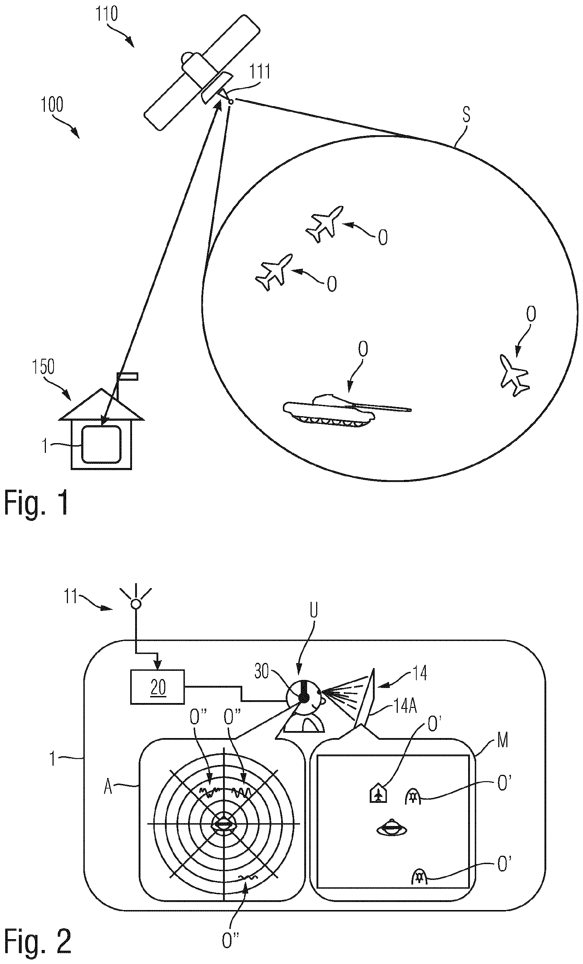

- Fig. 1: schematische Ansicht eines Überwachungssystems gemäß einem Ausführungsbeispiel der Erfindung;
- Fig. 2: eine vereinfachte schematische Funktionsansicht eines Systems zur Situationserkennung gemäß einem Ausführungsbeispiel der Erfindung;

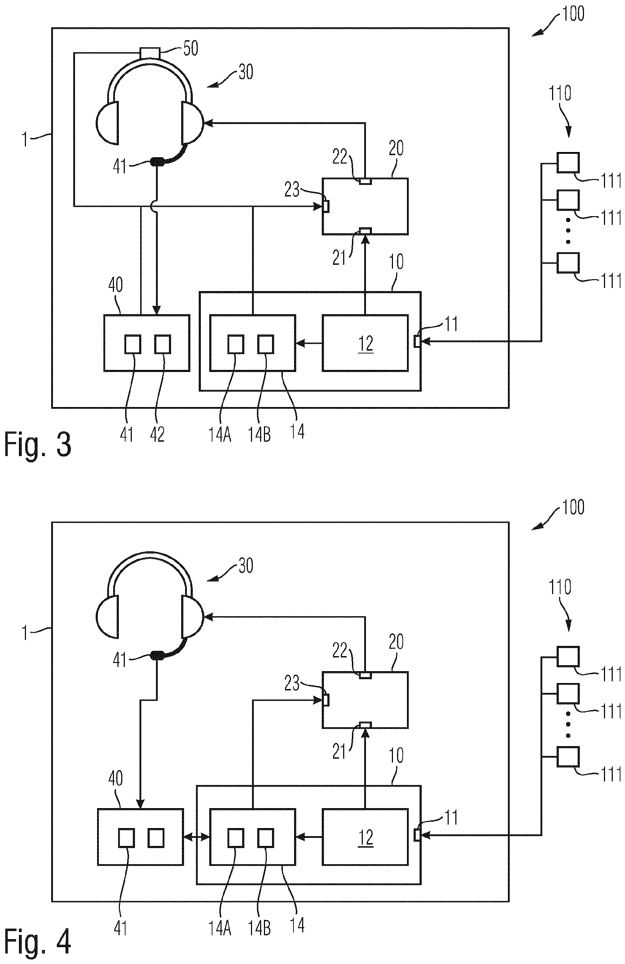

- Fig. 3: eine schematische Blockdarstellung eines Systems zur Situationserkennung gemäß einem Ausführungsbeispiel der Erfindung;
- Fig. 4: eine schematische Blockdarstellung eines Systems zur Situationserkennung gemäß einem weiteren Ausführungsbeispiel der Erfindung;

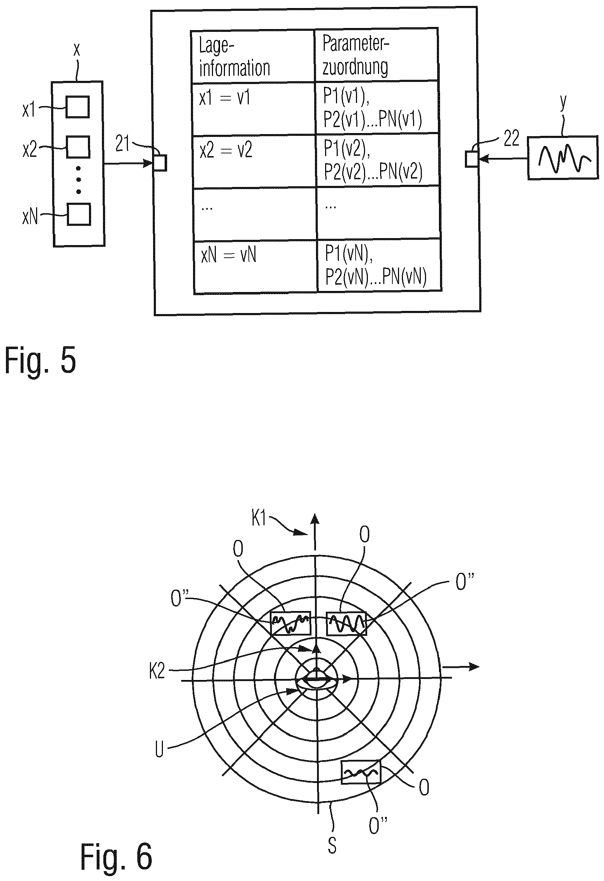

- Fig. 5: eine schematische Darstellung der Funktionsweise eines Sonifikationsmoduls eines Systems zur Situationserkennung gemäß einem Ausführungsbeispiel der Erfindung;
- Fig. 6: eine symbolische Darstellung der Wahrnehmung einer räumlichen Verteilung von Schall, der mittels eines Wandlers basierend aus einem Audiosignal erzeugbar ist, welches durch ein Sonifikationsmodul eines Systems zur Situationserkennung gemäß einem Ausführungsbeispiel der Erfindung erzeugt wird;

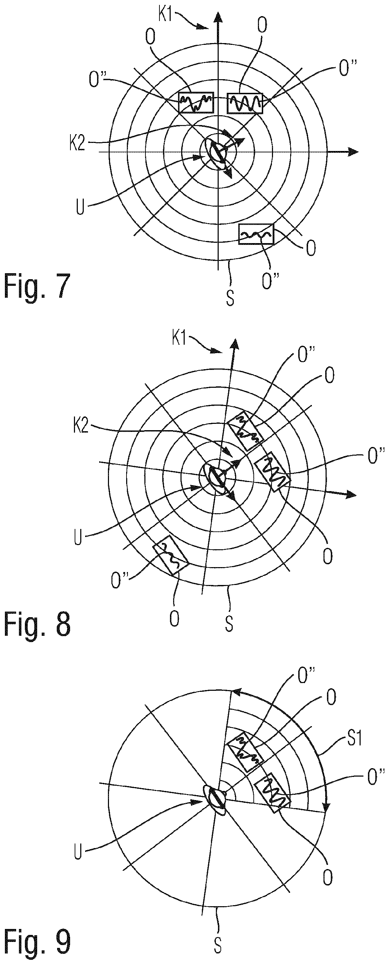

- Fig. 7: die Darstellung gemäß Fig. 6, wobei der Kopf eines Benutzers im Vergleich zu Fig. 6 gedreht ist, und wobei die Wahrnehmung der räumlichen Verteilung des Schalls in Bezug auf ein Referenzkoordinatensystem gleich ist und in Bezug auf ein benutzerfestes Koordinatensystem gedreht ist im Vergleich zu Fig. 6;
- Fig. 8: die Darstellung gemäß Fig. 6, wobei der Kopf eines Benutzers im Vergleich zu Fig. 6 gedreht ist, und wobei die Wahrnehmung der räumlichen Verteilung des Schalls in Bezug auf ein Referenzkoordinatensystem gleich ist und in Bezug auf ein benutzerfestes Koordinatensystem ebenfalls gleich ist im Vergleich zu Fig. 6;
- Fig. 9: eine symbolische Darstellung der Wahrnehmung einer räumlichen Verteilung von Schall, der mittels eines Wandlers basierend aus einem Audiosignal erzeugbar ist, welches durch ein Sonifikationsmodul eines Systems zur Situationserkennung gemäß einem Ausführungsbeispiel der Erfindung erzeugt wird, wobei lediglich Objekte in einem vorbestimmten Teilbereich eines Überwachungsraums als Schallquellen für den Benutzer wahrnehmbar sind;

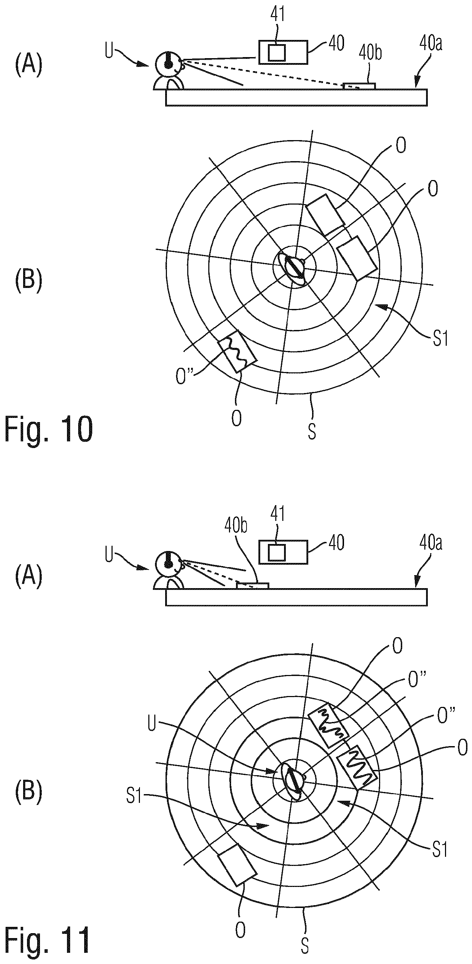

- Fig. 10: eine symbolische Darstellung der Wahrnehmung einer räumlichen Verteilung von Schall, der mittels eines Wandlers basierend aus einem Audiosignal erzeugbar ist, welches durch ein Sonifikationsmodul eines Systems zur Situationserkennung gemäß einem Ausführungsbeispiel der Erfindung erzeugt wird, wobei lediglich Objekte in einem vorbestimmten Teilbereich eines Überwachungsraums als Schallquellen für den Benutzer wahrnehmbar sind; und
- Fig. 11: eine symbolische Darstellung der Wahrnehmung einer räumlichen Verteilung von Schall durch einen Benutzer, der mittels eines Wandlers basierend aus einem Audiosignal erzeugbar ist, welches durch ein Sonifikationsmodul eines Systems zur Situationserkennung gemäß einem Ausführungsbeispiel der Erfindung erzeugt wird, wobei lediglich Objekte in einem vorbestimmten Teilbereich eines Überwachungsraums als Schallquellen für den Benutzer wahrnehmbar sind.

In den Figuren bezeichnen dieselben Bezugszeichen gleiche oder funktionsgleiche Komponenten, soweit nichts Gegenteiliges angegeben ist.

Fig. 1 zeigt in stark vereinfachter Weise ein Überwachungssystem 100 zur Überwachung eines Überwachungsraums S. Wie in Fig. 1 symbolisch dargestellt, umfasst das Überwachungssystem 100 ein System 1 zur Situationserkennung und ein Sensorsystem 110.

Das Sensorsystem 110 weist zumindest einen Überwachungssensor 111 auf, mit dem sich einem Überwachungsraum S befindliche mobile Objekte O detektierbar und Lagedaten der Objekte O erfassbar sind. Der Überwachungsraum S ist allgemein ein vorbestimmter geographischer Bereich optional mitsamt dem zugehörigen Luftraum oder es ist lediglich der zu dem geographischen Bereich gehörige Luftraum. In Fig. 1 ist symbolisch dargestellt, dass sich drei Flugzeuge und ein Panzer als Objekte O in dem Überwachungsraum S befinden. Die Überwachungssensoren 111 können beispielsweise als optische Sensoren, Radarsensoren, Lidarsensoren oder in ähnlicher Weise realisiert sein. In Fig. 1 ist das Sensorsystem 110 rein beispielhaft als ein Satellit dargestellt.

Mittels der Überwachungssensoren 111 werden Lagedaten der Objekte erfasst. Die Lagedaten enthalten als Lagedateninhalte zumindest eine räumliche Position der Objekte O innerhalb des Überwachungsraums S und ein Identifizierungsmerkmal des jeweiligen Objekts O, anhand dessen der Typ des jeweiligen Objekts O, z. B. "Flugzeug", "Panzer", "Hubschrauber", "Schiff", "unbekanntes/nicht identifzierbares Objekt" etc. ermittelbar ist. Die räumliche Position kann z. B. in Form von GPS-Koordinaten in den Lagedaten enthalten sein. Optional können zusätzlich weitere charakteristische Merkmale des Objekts, wie z. B. Bewegungsrichtung, Geschwindigkeit, Status "Freund" oder "Feind", etc. als Lagedateninhalt und somit als Information in den Lagedaten enthalten sein. Falls der Luftraum als Überwachungsraum S überwacht wird, können die Lagedaten beispielsweise ein Recognized Air Picture enthalten.

Das Sensorsystem 110 ist mit dem System 1 zur Situationserkennung verbunden, z. B. über eine drahtlose Datenverbindung. Das System 1 zur Situationserkennung erhält die vom Sensorsystem 110 erfassten Lagedaten und dient dazu, die erfassten Lagedaten in eine für einen menschlichen Benutzer U wahrnehmbare Ausgabe umzuwandeln, anhand derer der Benutzer U sich einen Überblick über die Lage bzw. die Situation im Überwachungsraum S verschaffen kann. Z. B. kann das System 1 in eine stationäre Kommandozentrale 150 integriert sein, wie dies in Fig. 1 symbolisch dargestellt ist. Selbstverständlich kann das System 1 aber auch auf einer mobilen Plattform, wie z. B. einem Fahrzeug, einem Flugzeug oder einem Schiff verwendet werden.

Fig. 2 zeigt in stark vereinfachter und symbolischer Weise das Funktionsprinzip des Systems 1 zur Situationserkennung bzw. dessen mögliche Verwendung durch einen menschlichen Benutzer U. Das System 1 umfasst eine Datenschnittstelle 11, eine optionale erste Bedieneinrichtung 14, ein Sonifikationsmodul 20 und einen elektroakustischen Schallwandler 30, z. B. in Form von Kopfhörern. Die Datenschnittstelle 11 und die erste Bedieneinrichtung 14 können Teil eines in Fig. 2 nicht dargestellten Hostsystems 10 sein.

Wie in Fig. 2 symbolisch dargestellt, weist die Bedieneinrichtung 14 eine Ausgabeeinrichtung 14A auf, z. B. in Form eines Displays. Die Bedieneinrichtung 14 ist mit der Datenschnittstelle 11 verbunden, z. B. über eine drahtlose oder drahtgebundene Datenverbindung. Mittels der Ausgabeeinrichtung 14A kann aus den Lagedaten eine visuelle Darstellung, z. B. in Form einer virtuellen Karte M, erzeugt werden. Diese visuelle Darstellung kann z. B. eine symbolische Wiedergabe O' der sich im Überwachungsraum S befindlichen Objekte O enthalten.

Wie in Fig. 2 außerdem dargestellt, ist das Sonifikationsmodul 20 mit der Datenschnittstelle 11 verbunden, z. B. über eine drahtlose oder drahtgebundene Datenverbindung. Das Sonifikationsmodul 20 ist dazu eingerichtet, die Lagedaten in ein Audiosignal umzuwandeln bzw. die Lagedaten als Audiosignal gemäß vorbestimmter Regeln zu codieren. Dies wird nachfolgend noch im Detail erläutert. Das Audiosignal enthält damit eine akustische Darstellung der Objekte O im Überwachungsraum S. Der elektroakustische Wandler 30, welcher mit dem Sonifkationsmodul 20 über eine drahtlose oder eine drahtgebundene Datenverbindung verbunden ist, ist dazu eingerichtet, das Audiosignal des Sonifikationsmoduls 20 in eine akustische Ausgabe umzuwandeln. Der Benutzer U erhält damit eine Art akustische Karte A, welche eine akustische Darstellung O" der sich im Überwachungsraum S befindlichen Objekte O enthält, wie dies in Fig. 2 symbolisch dargestellt ist.

Ein wesentlicher Vorteil der Sonifikation der Lagedaten besteht darin, dass die Fähigkeiten des menschlichen Gehörs in die Situationserkennung einbezogen werden. Dies entlastet den Benutzer U beispielsweise davon, sämtliche Informationen einer visuellen Darstellung entnehmen zu müssen. Aufgrund der Fähigkeit des menschlichen Gehörs, selbst kleinste Änderungen in akustischen Parametern wahrzunehmen, wird es dem Benutzer U durch die Sonifikation der Lagedaten außerdem erleichtert, Änderungen der Situation im Überwachungsraum, wie z. B. ein Auftauchen eines neuen Objekts O oder eine Verringerung der Entfernung eines feindlichen Objekts O zu einem freundlichen Objekt O, wahrzunehmen. Insbesondere wird es dem Benutzer U auf diese Weise auch erleichtert, den Überblick über eine große Anzahl an Objekten O zu behalten. Weiterhin wird die Parallelisierung von Aufgaben erleichtert. Ferner ist die akustische Darstellung weniger ortsgebunden als eine visuelle Darstellung, da der Benutzer U den Wandler 30 z. B. in Form von Kopfhörern mit sich führen und gleichzeitig andere Aufgaben wahrnehmen kann.

In Fig. 3 ist beispielhaft eine Blockdarstellung des Systems 1 zur Situationserkennung und des Überwachungssystems 100 dargestellt. Wie bereits erläutert, umfasst das System 1 ein Hostsystem 10 mit einer Datenschnittstelle 11, einem optionalen Datenspeicher 12 und einer optionalen ersten Bedieneinrichtung 14, ein Sonifikationsmodul 20, einen elektroakustischen Wandler 30, eine optionale zweite Bedieneinrichtung 40 und einen optionalen Orientierungssensor 50.

Das Hostsystem 10 kann insbesondere einen Server aufweisen. Die Datenschnittstelle 11 ist mit den Überwachungssensoren 111 des Sensorsystems 110 des Überwachungssystems 100 verbunden und erhält die von den Überwachungssensoren 111 erfassten und optional bereits durch eine externe Recheneinrichtung (nicht dargestellt) aufbereiteten Lagedaten. Diese können z. B. in dem optionalen Datenspeicher 12 gespeichert werden, welcher insbesondere als ein nicht-flüchtiger Datenspeicher wie ein EEPROM oder eine Festplatte realisiert sein kann.

Die optionale erste Bedieneinheit 14 kann insbesondere als ein Computer mit einem Prozessor (nicht dargestellt) und einem Datenspeicher (nicht dargestellt) realisiert sein. Der Prozessor kann beispielsweise ein ASIC, ein FPGA, ein PLD, ein digitaler Signalprozessor, ein Mikrocontroller oder eine andere geeignete Recheneinrichtung sein, die in der Lage ist, eingehende, die Lagedaten enthaltenden Signale zu verarbeiten und verarbeitete Signale in Ausgabewerte zu verwandeln. Die erste Bedieneinheit 14 umfasst ferner eine Ausgabeeinrichtung 14A, welche z. B. als Display realisiert sein kann und, wie oben bereits erläutert, dazu eingerichtet ist, eine visuelle Darstellung basierend auf den Lagedaten zu erzeugen. Die erste Bedieneinheit 14 kann außerdem eine Eingabeeinrichtung 14B aufweisen, welche z. B. als Tastatur oder allgemein als Eingabeschnittstelle realisiert ist, über welche der Benutzer U Steuerbefehle eingeben kann. Die erste Bedieneinheit 14 kann basierend auf den Steuerbefehlen Steuerdaten bzw. Steuersignale erzeugen, auf Basis derer weitere Komponenten des Systems 1, insbesondere das Sonifikationsmodul 20, zur Ausführung vorbestimmter Schritte veranlasst werden. Dies wird nachfolgend noch im Detail erläutert.

Das Sonifikationsmodul 20 kann, wie in Fig. 3 beispielhaft dargestellt, als von der ersten Bedieneinheit 14 bzw. als von dem Hostsystem 10 separate Einheit realisiert sein. In diesem Fall kann das Sonifikationsmodul 20 als ein Computer mit einem Prozessor (nicht dargestellt) und einem Datenspeicher (nicht dargestellt) realisiert sein. Der Prozessor kann beispielsweise ein ASIC, ein FPGA, ein PLD, ein digitaler Signalprozessor, ein Mikrocontroller oder eine andere geeignete Recheneinrichtung sein, die in der Lage ist, eingehende, die Lagedaten enthaltenden Signale zu verarbeiten und verarbeitete Lagedaten in Audiosignale zu verwandeln. Der Datenspeicher kann insbesondere ein nicht-flüchtiger Datenspeicher, wie z. B. ein EEPROM oder eine Festplatte sein, welcher ein Softwareprogramm speichert, welches dazu ausgelegt ist, den Prozessor zur Ausführung von Schritten zur Sonifikation der Lagedaten zu veranlassen. Das Sonifikationsmodul 20 kann auch rein als Softwaremodul bzw. Softwareprogramm realisiert sein, welches dazu ausgelegt ist, einen Prozessor zur Ausführung von Schritten zur Sonifikation der Lagedaten zu veranlassen.

Wie in Fig. 3 symbolisch dargestellt, weist das Sonifikationsmodul 20 eine Eingangsschnittstelle 21, eine Ausgabeschnittstelle 22 und eine Steuerschnittstelle 23 auf. Die Eingangsschnittstelle 21 kann mit dem Datenspeicher 12 des Hostsystems 10 oder direkt mit der Datenschnittstelle 11 des Hostsystems 10 verbunden sein. Die Ausgabeschnittstelle 22 ist mit dem akustischen Wandler 30 verbunden, z. B. über eine drahtgebundene oder drahtlose Datenverbindung wie Bluetooth, WiFi oder dergleichen.

Über die Eingabeschnittstelle 21 erhält das Sonifikationsmodul 20 die Lagedaten, wandelt diese anhand vorbestimmter Regeln in ein Audiosignal um und stellt das Audiosignal an der Ausgabeschnittstelle 22 bereit. In Fig. 5 ist die Sonifizierung von Lagedaten durch das Sonifikationsmodul 20 symbolisch dargestellt. Sonifikationsmodul 20 kann z. B. die zu einem bestimmten, sich im Überwachungsraum S befindlichen Objekt O die Lagedaten als Eingangsdatensatz x erhalten.

Der Eingangsdatensatz x enthält verschiedene Lagedateninhalte x1, x2...xN. Beispielsweise kann der Lagedateninhalt x1 als Wert v1 die Position des Objekts O in Form von GPS-Koordinaten sein, der Lagedateninhalt x2 als Wert v2 das Identifizierungsmerkmal des Objekts usw. Allgemein weist jeder Lagedateninhalt xN einen Wert vN auf. Das Sonifikationsmodul 20 ermittelt für jeden Lagedateninhalt xl...xN akustische Parameter P1, P2...PN. Die akustischen Parameter P1, P2...PN können z. B. eine Tonhöhe, eine Klangfarbe, ein Rhythmus, eine Lautstärke, ein Akkord oder ähnliche Parameter sein.

Für jeden Lagedateninhalt xl...xN kann z. B. ein Look-up Table vorliegen, in welchem für jeden Wert v1 bestimmte akustische Parameter P1, P2...PN hinterlegt sind. Z. B. können für den Lagedateninhalt x2, welcher im vorliegenden Beispiel das Identifizierungsmerkmal des Objekts O enthält, bei einem Wert v2, der das Objekt als Flugzeug identifiziert, eine bestimmte Tonhöhe und eine bestimmte Klangfarbe als Parameter P1, P2 in dem Look-up Table hinterlegt sein. Gemäß dieser jeweils vorbestimmten, systematischen Zuordnung von akustischen Parametern zu den Lagedateninhalten ermittelt das Sonifikationsmdoul 20 die akustischen Parameter.

Ferner erzeugt das Sonifikationsmodul 20 ein die ermittelten akustischen Parameter repräsentierendes Audiosignal y und gibt das Audiosignal y an der Ausgabeschnittstelle 22 aus, wie dies in Fig. 5 symbolisch dargestellt ist. Damit werden die Lagedaten durch das Sonifikationsmodul 20 gemäß einer vorbestimmten Regel abhängig von den Lagedateninhalten als Audiosignal codiert.

Der elektroakustische Wandler 30 weist zumindest eine Schallquelle, optional zumindest zwei oder mehr Schallquellen auf, welche dazu eingerichtet sind, Schall basierend auf dem Audiosignal zu erzeugen. Der elektroakustische Wandler 30 kann z. B. zu einer, in Bezug auf den Benutzer U, ortsfesten Anordnung eingerichtet sein, z. B. indem dieser als ein durch den Benutzer U tragbarer Kopfhörer realisiert ist, wie dies in den Fign. 3 und 4 beispielhaft dargestellt ist. Selbstverständlich kann der Wandler 30 auch als ein Set aus Lautsprechern realisiert sein, relativ zu welchen der Benutzer U sich frei bewegen kann, z. B. als wandmontierte Lautsprecher in einem Raum einer Kommandozentrale.

Das Sonifikationsmodul 20 kann dazu eingerichtet sein, basierend auf der in den Lagedaten enthaltenen Position der Objekte O ein Richtungssignal zu erzeugen, welches eine Orientierung der Objekte O in Bezug auf einen Ursprung eines Referenzkoordinatensystems K1 des Überwachungsraums S repräsentiert. In Fig. 6 ist symbolisch eine Draufsicht auf den Überwachungsraum S mit dem Referenzkoordinatensystems K1 dargestellt, wobei sich der Benutzer U im Ursprung des Referenzkoordinatensystems K1 aufhält. Ferner sind drei Objekte O symbolisch als Rechtecke dargestellt sowie deren akustische Repräsentation O". Anhand der Position der Objekte O, die in den Lagedaten als Lageinformation enthalten ist, erzeugt das Sonifikationsmodul 20 ein Richtungssignal, welches die Richtung beschreibt, z. B. als Vektor, in welcher sich das Objekt O vom Ursprung des Referenzkoordinatensystems K1 befindet. Dieses Referenzsignal stellt das Sonifikationsmodul 20 an der Ausgabeschnittstelle 22 bereit und der akustische Wandler 30, welcher in diesem Fall zumindest zwei Schallquellen aufweist, wandelt das Audiosignal mittels der zumindest zwei Schallquellen basierend auf dem Richtungssignal in eine die Orientierung repräsentierende akustische Ausgabe um. Das heißt, die Schallquellen des Wandlers 30 sind räumlich um den Benutzer U verteilt angeordnet, z. B. in dem je Ohrstück des Kopfhörers mehrere, verschieden orientierte Schallquellen vorgesehen sind, und werden so durch das Audiosignal angesteuert, dass für den Benutzer U annähernd der Eindruck entsteht, als würde die zu dem jeweiligen Objekt O gehörige akustische Repräsentation O" aus der durch das Richtungssignal definierten Richtung kommen.

Wie in Fig. 3 weiterhin gezeigt ist, kann das System 1 einen Orientierungssensor 50 aufweisen, welcher dazu eingerichtet ist, eine Orientierung des Kopfs des Benutzers U relativ zum Ursprung des Referenzkoordinatensystems zu erfassen und ein die Orientierung des Kopfs des Benutzers U relativ zum Ursprung des Referenzkoordinatensystems K1 repräsentierendes Orientierungssignal zu erzeugen. Der Orientierungssensor 50 kann z. B. durch einen Beschleunigungssensor oder ein Gyroskop realisiert sein, welcher ortsfest mit dem als Kopfhörer realisierten Wandler 30 verbunden ist oder anders ortsfest an dem Kopf des Benutzers U befestigbar ist. Auch ist denkbar, einen optischen Sensor, z. B. eine Kamera, als Orientierungssensor 50 zu verwenden, welcher die Bewegung des Kopfs des Benutzers U erfasst. Auf diese Weise kann erfasst werden, wie der Kopf des Benutzers U und damit dessen Ohren bzw. ein Benutzerkoordinatensystem K2, welches ortsfest in Bezug auf den Benutzer, insbesondere in Bezug auf den Kopf des Benutzers U ist, relativ zu dem Referenzkoordinatensystem K1 orientiert sind. Wie in Fig. 7 beispielhaft gezeigt ist, ist das Benutzerkoordinatensystem K2 im Vergleich zu Fig. 6 um einen Winkel α gedreht. Dieser Winkel α kann z. B. durch den Orientierungssensor 50 erfasst werden und dieser erzeugt ein den Winkel repräsentierendes Orientierungssignal.

Der optionale Orientierungssensor 50 ist mit dem Sonifikationsmodul 20 verbunden, z. B. über eine drahtlose oder drahtgebundene Datenkommunikation. Insbesondere kann der Orientierungssensor 50 mit dem Steuereingang 23 des Sonifikationsmoduls 20 verbunden sein. Das Sonifikationsmodul 20 ist dazu eingerichtet, das Richtungssignal basierend auf dem Orientierungssignal derart zu modifizieren, dass das Richtungssignal eine Orientierung der Objekte O relativ zu einem Ursprung des Benutzerkoordinatensystems K2 repräsentiert, welche deren Orientierung im Referenzkoordinatensystem K1 entspricht, wenn der Wandler 30 nicht ortsfest in Bezug auf den Benutzer U angeordnet ist. Wenn der Wandler 30 also als in Bezug auf das Referenzkoordinatensystem K1 ortsfester Lautsprecher ausgebildet ist, werden die Schallquellen des Wandlers 30 durch das Richtungssignal, welches durch das Orientierungssignal modifiziert ist, so angesteuert, dass in Bezug auf das Benutzerkoordinatensystem K2 die akustische Repräsentation O" der Objekte O stets aus derselben Richtung kommen. Die akustische Repräsentation O" hat somit im Benutzerkoordinatensystem K2 dieselben Koordinaten bzw. dieselbe Richtung wie im Referenzkoordinatensystem K1. Der Klang wird, anschaulich gesprochen, mit dem Benutzer mitgedreht. Dies ist beispielhaft in Fig. 8 dargestellt. Ferner ist Sonifikationsmodul 20 dazu eingerichtet, das Richtungssignal basierend auf dem Orientierungssignal derart zu modifizieren, dass dieses eine Orientierung der Objekte O relativ zu dem Ursprung eines Benutzerkoordinatensystems K2 repräsentiert, wenn der Wandler 30 ortsfest in Bezug auf den Benutzer U angeordnet ist. Wenn der Wandler 30 also als in Bezug auf das Benutzerkoordinatensystem K2 ortsfester Lautsprecher bzw. Kopfhörer ausgebildet ist, werden die Schallquellen des Wandlers 30 durch das Richtungssignal, welches durch das Orientierungssignal modifiziert ist, so angesteuert, dass die Richtung, aus der die akustische Repräsentation O" der Objekte O in Bezug auf das Benutzerkoordinatensystem K2 kommt, sich mit der Drehung des Benutzerkoordinatensystems K2 ändert. Der Klang wird, anschaulich gesprochen, entgegen der Drehung des Kopfs des Benutzers U gedreht und damit in Bezug auf das Referenzkoordinatensystem K1 festgehalten. Dies ist in Fig. 7 beispielhaft dargestellt.

Wie in Fig. 3 weiterhin dargestellt ist, ist die optionale erste Bedieneinrichtung 14 mit dem Sonifikationsmodul 20 verbunden. Insbesondere kann die erste Bedieneinrichtung 14 mit der Steuerschnittstelle 23 des Sonifikationsmoduls 20 verbunden sein. Ferner ist die erste Bedieneinrichtung 14 entweder direkt mit der Datenschnittstelle 11 des Hostsystems 10 oder mit dem optionalen Speicher 12 und somit über diesen mit der Datenschnittstelle 11 des Hostsystems 10 verbunden, wie dies in Fig. 3 beispielhaft dargestellt ist. Wie bereits erläutert, ist die Eingabeeinrichtung 14B der ersten Bedieneinrichtung 14 zur Eingabe von Steuerbefehlen durch den Benutzer U eingerichtet. Basierend auf den Steuerbefehlen erzeugt die Eingabeeinrichtung 14B Steuersignale, welche Steuerdaten repräsentieren bzw. enthalten. Das Sonifikationsmodul 20 erhält diese Steuerdaten an der Steuerschnittstelle 23 und ist dazu eingerichtet, die Erzeugung des Audiosignals gemäß den eingegebenen Steuerbefehlen anzupassen. So kann der Benutzer U beispielsweise die Zuordnung der akustischen Parameter zu den Lagedateninhalten ändern. Z. B. ist denkbar, dass der Benutzer einen Steuerbefehl in die Eingabeeinrichtung 14B eingeben kann, aufgrund dessen das Sonifikationsmodul 20 dazu veranlasst wird, den für einen bestimmten Objekttyp verwendeten Ton oder die Klangfarbe zu verändern, z. B. durch Änderung des jeweiligen Look-up Tables. Auch weitere oder andere, im Folgenden noch erläuterte Steuerbefehle sind als Eingabe über die Eingabeeinrichtung 14B denkbar.

Die zweite Bedieneinrichtung 40 ist als interaktive Bedieneinrichtung gestaltet, durch welche der Benutzer U über Gesten, sprachliche Äußerungen oder andere körperliche Willensbekundungen Steuerbefehle erzeugen kann. Hierzu weist die zweite Bedieneinrichtung 40 eine Sensoreinrichtung 41 zum Erfassen einer Bewegung des Benutzers U und/oder einer sprachlichen Äußerung des Benutzers U auf. Beispielsweise kann die Sensoreinrichtung 41 als ein Mikrophon realisiert sein, als optischer Sensor, als in einen sogenannten Datenhandschuh integrierte kapazitive Sensoren oder in ähnlicher Weise. Optional kann die zweite Bedieneinrichtung 40 einen Prozessor oder allgemein einen Signalwandler 42 aufweisen, welcher zur Umwandlung der von der Sensoreinrichtung 41 erfassten Daten in Steuerbefehle eingerichtet ist. Allgemein ist die zweite Bedieneinrichtung 40 dazu eingerichtet, einen Steuerbefehl basierend auf der erfassten Bewegung und/oder auf der erfassten Äußerung zu erzeugen. Wie in Fig. 3 weiterhin dargestellt ist, kann die zweite Bedieneinrichtung 40 direkt mit der Steuerschnittstelle 23 des Sonifikationsmoduls 20 verbunden sein, z. B. über eine drahtlose oder drahtgebundene Datenkommunikation. Ein Vorteil dieser Lösung liegt darin, dass eine vom Hostsystem 10 unabhängige Benutzerschnittstelle bereitgestellt und damit die Abstimmung von Benutzerschnittstelle und Sonifikationsmodul 20 erleichtert wird. Alternativ hierzu kann die zweite Bedieneinrichtung 40 auch mit dem Hostsystem 10 verbunden sein, z. B. mit der ersten Bedieneinrichtung 14, welche ihrerseits mit der Steuerschnittstelle verbunden ist, wie dies beispielhaft in Fig. 4 dargestellt ist. Dies bietet den Vorteil, dass die zweite Bedieneinrichtung 40 auch für andere Funktionen des Hostsystems 10 genutzt werden kann. Das Sonifikationsmodul 20 ist dazu eingerichtet, die Erzeugung des Audiosignals gemäß den eingegebenen Steuerbefehlen anzupassen. Dies funktioniert analog zu den mit der ersten Bedieneinrichtung 14 erzeugten Steuerbefehlen. Grundsätzlich kann vorgesehen sein, dass sowohl die erste als auch die zweite Bedieneinrichtung 14, 40 jeweils dieselben Steuerbefehle erzeugen können und diese durch das Sonifikationsmodul 20 auch in gleicher Weise verarbeitet werden. Im Folgenden wird zur Vermeidung von Wiederholungen deshalb nicht unterschieden, ob die Steuerbefehle durch die erste oder die zweite Bedieneinrichtung 14, 40 erzeugt werden.

Beispielsweise kann vorgesehen sein, dass der Steuerbefehl Steuerdaten enthält, die einen Teilbereich S1 des Überwachungsraums S räumlich definieren, und dass das Sonifikationsmodul 20 dazu eingerichtet ist, basierend auf den Steuerdaten Lagedaten von Objekten O auszuwählen, die sich in dem definierten Teilbereich S1 des Überwachungsraums S befinden, und das Audiosignal nur aus den Lagedaten dieser Objekte O zu erzeugen. Dies ist beispielhaft in den Fign. 9 bis 11 dargestellt.

In Fig. 9 ist der Teilbereich S1 beispielhaft als ein Kreissektor dargestellt. Die Objekte O sind symbolisch als Rechtecke dargestellt und die akustischen Repräsentationen O" der jeweiligen Objekte O sind symbolisch durch Wellensymbole dargestellt. Das Sonifikationsmodul 20 ist dazu eingerichtet, die an der Eingangsschnittstelle 21 erhaltenen Lagedaten 20 zu filtern, z. B. anhand der Lageinformation "Position des Objekts", und nur die Lagedaten zu sonifizieren, die zu Objekten O gehören, die sich in dem Teilbereich S1 befinden. In Fig. 9 bedeutet dies, dass zu den beiden sich in dem Teilbereich S1 befindlichen Objekten O der Wandler 30 aus dem Audiosignal eine akustische Repräsentation O" erzeugt, nicht aber zu dem sich außerhalb des Teilbereichs S1 befindlichen Objekt O.

In den Fign. 10 und 11 ist der Teilbereich S1 in den Ansichten (B) beispielhaft als Kreisring um den Benutzer U dargestellt. In Fig. 10 weist der Teilbereich S1 einen größeren Abstand zum Benutzer U auf als in Fig. 11. In Fig. 10 wird daher vom Wandler 30 aus dem Audiosignal nur für das sich in dem Teilbereich S1 befindliche, weit vom Benutzer U entfernte Objekt O eine akustische Repräsentation O" erzeugt, nicht aber zu den sich außerhalb des Teilbereichs S1 befindlichen Objekten O, die näher beim Benutzer U dargestellt sind. Dies gilt auch für Objekte O, die einen größeren Abstand zum Benutzer U besitzen, als das in dem Teilbereich S1 befindliche Objekt O, also allgemein für sich außerhalb des Teilbereichs S1 befindliche Objekte. In Fig. 11 hingegen werden vom Wandler 30 aus dem Audiosignal nur zu den beiden sich in dem Teilbereich S1 befindlichen, nahen Objekten O eine akustische Repräsentation O" erzeugt, nicht aber zu dem sich außerhalb des Teilbereichs S1 befindlichen entfernten Objekt O. Dies gilt auch für Objekten O, die einen kleineren Abstand zum Benutzer U besitzen, als die in dem Teilbereich S1 befindlichen Objekte O, also allgemein für sich außerhalb des Teilbereichs S1 befindliche Objekte.

In den Ansichten (A) der Fign. 10 und 11 ist nochmals das Prinzip der Eingabe von Steuerbefehlen durch den Benutzer U über die zweite Eingabeeinrichtung 40 beispielhaft dargestellt. Die Sensoreinrichtung 41 kann in diesem Fall z. B. als ein optischer Sensor realisiert sein, der als Eyetracker ausgebildet ist. Das heißt, mittels des Sensors 41 wird eine Blickrichtung der Augen des Benutzers U erfasst und basierend auf der Blickrichtung ein Bereich 40b auf einer Referenzfläche 40a ermittelt, auf die der Nutzer U blickt. Diesem Bereich 40b kann z. B. ein vorbestimmter Teilbereich S1 des Überwachungsraums S zugeordnet sein und die zweite Eingabeeinrichtung 40 kann die den Teilbereich S1 repräsentierenden Steuerdaten abrufen und ein entsprechendes Steuersignal erzeugen.

Zusätzlich oder alternativ zu einem Teilbereich S1, kann der Steuerbefehl das Identifikationsmerkmal von einem oder mehreren Objekten O als Steuerdaten enthalten. Demnach kann durch den Benutzer U vorgebbar sein, von welchen Typen von Objekten O die Lagedaten sonifiziert werden sollen. Z. B. kann ein Benutzer U eingeben, dass lediglich Lagedaten von Flugzeugen sonifiziert werden sollen. Das Sonifikationsmodul 20 ist dementsprechend dazu eingerichtet, Lagedaten von Objekten O auszuwählen, die das entsprechende Identifikationsmerkmal aufweisen, und das Audiosignal nur aus den Lagedaten dieser Objekte O erzeugen.

Ein Verfahren zur Überwachung eines Überwachungsraums S kann insbesondere mittels des voranstehend beschriebenen Überwachungssystems 100 durchgeführt werden. In einem ersten Schritt werden hierbei die Lagedaten von sich in dem Überwachungsraum S befindlichen Objekten O mittels der Überwachungssensoren 111 erfasst. In einem weiteren Schritt werden die akustischen Parameter gemäß einer vorbestimmten Zuordnung von akustischen Parametern zu den Lagedateninhalten ermittelt, z. B. mittels des Sonifikationsmoduls 20 wie anhand der Fig. 5 beispielhaft erläutert wurde. Weiterhin erfolgt ein Erzeugen des die akustischen Parameter repräsentierenden Audiosignals, z. B. mittels des Sonifikationsmoduls 20. Dieses Audiosignal wird dann mittels des Wandlers 30 in eine durch einen menschlichen Benutzer U wahrnehmbare akustische Ausgabe umgewandelt.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: System
- 10: Hostsystem
- 11: erste Datenschnittstelle
- 12: Datenspeicher
- 14: erste Bedieneinrichtung
- 14A: Ausgabeeinrichtung
- 14B: Eingabeeinrichtung

- 20: Sonifikationsmodul
- 21: Eingangsschnittstelle
- 22: Ausgabeschnittstelle
- 23: Steuerschnittstelle
- 30: akustischer Wandler
- 40: interaktive, zweite Bedieneinrichtung
- 41: Sensoreinrichtung der zweiten Bedieneinrichtung
- 42: Signalwandler
- 50: Orientierungssensor

- 100: Überwachungssystem
- 110: Sensorsystem
- 111: Überwachungssensoren
- 150: Kommandozentrale

- A: Akustische Karte
- K1: Referenzkoordinatensystem
- K2: Benutzerkoordinatensystem
- M: virtuelle Karte
- O: Objekt
- O': graphische Repräsentation des Objekts
- O": akustische Repräsentation des Objekts
- S: Überwachungsraum
- S1: Teilbereich
- U: Benutzer
- α: Winkel

## Patentansprüche

1. System (1) zur Situationserkennung bezüglich sich in einem Überwachungsraum (S) befindlicher mobiler Objekte (O), mit:
einem Hostsystem (10) mit einer Datenschnittstelle (11) zum Empfang von Lagedaten, welche als Lagedateninhalte zumindest enthalten: eine räumliche Position der Objekte (O) innerhalb des Überwachungsraums (S) und zumindest ein Identifizierungsmerkmal des jeweiligen Objekts (O);
einem mit dem Hostsystem (10) verbundenen Sonifikationsmodul (20) mit einer Ausgabeschnittstelle (22), wobei das Sonifikationsmodul (20) dazu eingerichtet ist, gemäß einer vorbestimmten Zuordnung von akustischen Parametern zu den Lagedateninhalten akustische Parameter zu ermitteln, ein die ermittelten akustischen Parameter repräsentierendes Audiosignal zu erzeugen und das Audiosignal an der Ausgabeschnittstelle (22) auszugeben; und
einem mit der Ausgabeschnittstelle (22) des Sonifikationsmoduls (20) verbundenen akustischen Wandler (30), welcher dazu eingerichtet ist, das Audiosignal des Sonifikationsmoduls (20) in eine durch einen menschlichen Benutzer (U) wahrnehmbare akustische Ausgabe umzuwandeln.

2. System (1) nach Anspruch 1, wobei die akustischen Parameter einen oder mehrere der folgenden Parameter umfassen:
Tonhöhe, Klangfarbe, Rhythmus, Lautstärke, Akkorde.

3. System (1) nach Anspruch 1 oder 2, wobei die mobilen Objekte (O) Luftfahrzeuge umfassen und die Lagedaten ein Recognized Air Picture enthalten.

4. System (1) nach einem der voranstehenden Ansprüche, wobei das Hostsystem (10) eine mit der Datenschnittstelle (11) verbundene erste Bedieneinrichtung (14) mit einer Ausgabeeinrichtung (14A) zur Erzeugung einer visuellen Darstellung basierend auf den Lagedaten aufweist.

5. System (1) nach Anspruch 4, wobei die erste Bedieneinrichtung (14) eine Eingabeeinrichtung (14B) zur Eingabe von Steuerbefehlen durch den Benutzer (U) aufweist, wobei das Sonifikationsmodul (20) dazu eingerichtet ist, die Erzeugung des Audiosignals gemäß den eingegebenen Steuerbefehlen anzupassen.

6. System (1) nach einem der voranstehenden Ansprüche, zusätzlich aufweisend:
eine mit dem Hostsystem (10) oder einer Steuerschnittstelle (23) des Sonifikationsmoduls (20) verbundene zweite, interaktive Bedieneinrichtung (40), welche eine Sensoreinrichtung (41) zum Erfassen einer Bewegung des Benutzers (U) und/oder einer sprachlichen Äußerung des Benutzers (U) aufweist und dazu eingerichtet ist, einen Steuerbefehl, basierend auf der erfassten Bewegung und/oder auf der erfassten Äußerung, zu erzeugen;
wobei das Sonifikationsmodul (20) dazu eingerichtet ist, die Erzeugung des Audiosignals gemäß den eingegebenen Steuerbefehlen anzupassen.

7. System (1) nach Anspruch 5 oder 6, wobei der Steuerbefehl Steuerdaten enthält, die einen Teilbereich (S1) des Überwachungsraums (S) räumlich definieren, und wobei das Sonifikationsmodul (20) dazu eingerichtet ist, basierend auf den Steuerdaten Lagedaten von Objekten (O) auszuwählen, die sich in dem definierten Teilbereich (S1) des Überwachungsraums (S) befinden, und das Audiosignal nur aus den Lagedaten dieser Objekte (O) erzeugen.

8. System (1) nach einem der Ansprüche 5 bis 7, wobei der Steuerbefehl das Identifikationsmerkmal von einem oder mehreren Objekten (O) als Steuerdaten enthält, und wobei das Sonifikationsmodul (20) dazu eingerichtet ist, Lagedaten von Objekten (O) auszuwählen, die das entsprechende Identifikationsmerkmal aufweisen, und das Audiosignal nur aus den Lagedaten dieser Objekte (O) erzeugt.

9. System (1) nach einem der voranstehenden Ansprüche, wobei das Sonifikationsmodul (20) dazu eingerichtet ist, basierend auf der in den Lagedaten enthaltenen Position der Objekte (O) ein Richtungssignal zu erzeugen, welches eine Orientierung der Objekte (O) in Bezug auf einen Ursprung eines Referenzkoordinatensystems des Überwachungsraums (S) repräsentiert, und wobei der akustische Wandler (30) zumindest zwei Schallquellen aufweist und dazu eingerichtet ist, basierend auf dem Richtungssignal das Audiosignal mittels der zumindest zwei Schallquellen in eine die Orientierung repräsentierende akustische Ausgabe umzuwandeln.

10. System (1) nach Anspruch 9, zusätzlich aufweisend:
einen mit dem Sonifikationsmodul (20) verbundenen Orientierungssensor (50), welcher dazu eingerichtet ist, eine Orientierung des Kopfs des Benutzers (U) relativ zum Ursprung des Referenzkoordinatensystems (K1) zu erfassen und ein die Orientierung des Kopfs des Benutzers (U) relativ zum Ursprung des Referenzkoordinatensystems (K1) repräsentierendes Orientierungssignal zu erzeugen;
wobei das Sonifikationsmodul (20) dazu eingerichtet ist,
- das Richtungssignal basierend auf dem Orientierungssignal derart zu modifizieren, dass dieses eine Orientierung der Objekte (O) relativ zu einem Ursprung eines Benutzerkoordinatensystems (K2), das ortsfest in Bezug auf den Kopf des Benutzers (U) ist, repräsentiert, welche deren Orientierung im Referenzkoordinatensystem (K1) entspricht, wenn der Wandler (30) nicht ortsfest in Bezug auf den Benutzer (U) angeordnet ist, und
- das Richtungssignal basierend auf dem Orientierungssignal derart zu modifizieren, dass dieses eine Orientierung der Objekte (O) relativ zu dem Ursprung eines Benutzerkoordinatensystems (K2) repräsentiert, wenn der Wandler (30) ortsfest in Bezug auf den Benutzer (U) angeordnet ist.

11. System (1) nach einem der voranstehenden Ansprüche, wobei das Hostsystem (10) einen mit der Datenschnittstelle (11) verbundenen Datenspeicher (12) aufweist, welcher die Lagedaten speichert, wobei das Sonifikationsmodul (20) mit dem Datenspeicher (12) verbunden ist.

12. Überwachungssystem (100) zum Überwachen eines Überwachungsraums (S), mit:
einem Sensorsystem (110) mit einer Vielzahl an Überwachungssensoren (111) zum Erfassen von Lagedaten von sich in dem Überwachungsraum (S) befindlichen Objekten (O), wobei die Lagedaten als Lagedateninhalte zumindest enthalten: eine räumliche Position der Objekte innerhalb des Überwachungsraums (S) und ein Identifizierungsmerkmal des jeweiligen Objekts (O); und
ein System (1) gemäß einem der voranstehenden Ansprüche;
wobei das Sensorsystem (110) mit der Datenschnittstelle (11) des Hostsystems (10) verbunden ist.

13. Verfahren zur Überwachung eines Überwachungsraums (S), aufweisend:
Erfassen von Lagedaten von sich in dem Überwachungsraum (S) befindlichen Objekten (O) mittels Überwachungssensoren (111), wobei die Lagedaten als Lagedateninhalte zumindest enthalten: eine räumliche Position der Objekte innerhalb des Überwachungsraums (S) und ein Identifizierungsmerkmal des jeweiligen Objekts (O);
Ermitteln akustischer Parameter gemäß einer vorbestimmten Zuordnung von akustischen Parametern zu den Lagedateninhalten;
Erzeugen eines die akustischen Parameter repräsentierenden Audiosignals;
und
Umwandeln des Audiosignals in eine durch einen menschlichen Benutzer (U) wahrnehmbare akustische Ausgabe mittels eines akustischen Wandlers (30).
